# EUROPEAN PATENT APPLICATION

(11) **EP 2 375 769 A2**
(43) Date of publication of application: **12.10.2011**
(21) Application number: 11161490.5
(22) Date of filing: 07.04.2011
(51) Int. Cl.: H04N 17/00

(54) **Evaluation system, evaluation device, evaluation method, and recording medium**

(30) Priority: 09.04.2010 JP 2010090812
(71) Applicant: Mitsumi Electric Co., Ltd., Tama-shi, Tokyo 206-8567 (JP)
(72) Inventor: Miyamoto, Hirokatsu, Tokyo 206-8567 (JP); Murayama, Shotaro, Tokyo 206-8567 (JP); Andoh, Junichi, Tokyo 206-8567 (JP)
(74) Representative: Kopf, Korbinian Paul

(57) **Abstract**

In an evaluation system including a subject device under evaluation, a remote controller which operates the subject device, and an evaluation device which controls the remote controller to operate the subject device and automatically evaluates operation of the subject device, the evaluation device includes an execution unit that generates and executes a code for causing the remote controller to operate the subject device. A transmitting unit transmits the code to the remote controller. A receiving unit receives a log acquired by the subject device as a result of operation of the subject device. An analysis unit analyzes the log received by the receiving unit. A determination unit determines correctness of operation of the subject device based on a result of the analysis by the analysis unit, and causes the subject device to perform a subsequent operation.

## Description

### BACKGROUND OF THE INVENTION

### 1. Field of the Invention

The present disclosure relates to an evaluation system, an evaluation device, an evaluation method, and a recording medium which are adapted to automatically evaluate operation of a subject device as the device under evaluation, the evaluation system including the subject device, a remote controller which operates the subject device, and an evaluation device which controls the remote controller to operate the subject device, and the evaluation device being caused to automatically evaluate operation of the subject device through the remote controller.

### 2. Description of the Related Art

Conventionally, an electronic device in which operation of a device main part is remotely controlled using a remote controller has been widespread. In this electronic device, it is necessary to verify whether control by the remote controller can be correctly performed and to evaluate operation of the electronic device.

According to the related art, verification and evaluation of operation of such electronic devices have been carried out by manpower. For example, a person in charge of evaluation of operation of an electronic device actually manipulates the remote controller and judges whether the electronic device operates correctly in accordance with the manipulation of the remote controller.

In recent years, however, control of the electronic device by the remote controller is becoming complicated, and the verification and evaluation by manpower require much expense in time and effort. Accordingly, automation of verification and evaluation is desired.

For example, Japanese Laid-Open Patent Publication No. 2002-189617 discloses an evaluation system and an evaluation method which are adapted to evaluate operation of a device with little expense in time and effort.

As mentioned above, the verification and evaluation by manpower require much expense in time and effort, and a mistake in operation of the remote controller may arise. Moreover, in a case of the verification and evaluation by manpower, measurement of a time with respect to a state transition of an electronic device under evaluation is performed with a stop watch. It is difficult to measure exact time by manpower.

If an error of an electronic device with poor repeatability arises, it is necessary for the person in charge to analyze a log acquired by verification operation and operate the remote controller manually such that the error occurs in the same manner. In such a case, the analysis of the log requires much time and it is difficult to cause the error to occur in the same manner by manpower.

A conceivable method for eliminating the problem is to make use of a commercially available tool to control operation of the electronic device. However, the control which is performed by using the commercially available tool is a predetermined one-way control, and it is difficult to give some flexibility to the control to make it appropriate for the operating state of the electronic device under evaluation. Even if an error occurs during the controlled operation of the electronic device under evaluation, the operation will be continued in a predetermined one-way fashion.

### SUMMARY OF THE INVENTION

In one aspect, the present disclosure provides an evaluation system, an evaluation device, an evaluation method, and a recording medium which are capable of automatically performing evaluation of operation of a subject device with good accuracy and reducing the expenses in time and effort for verification and evaluation of operation of the subject device.

In an embodiment which solves or reduces one or more of the above-mentioned problems, the present disclosure provides an evaluation system including: a subject device under evaluation; a remote controller which operates the subject device; and an evaluation device which controls the remote controller to operate the subject device and automatically evaluates operation of the subject device, the evaluation device including: an execution unit configured to generate and execute a code for causing the remote controller to operate the subject device; a transmitting unit configured to transmit the code to the remote controller; a receiving unit configured to receive a log acquired by the subject device as a result of operation of the subject device; an analysis unit configured to analyze the log received by the receiving unit; and a determination unit configured to determine correctness of operation of the subject device based on a result of the analysis by the analysis unit, and to cause the subject device to perform a subsequent operation.

In an embodiment which solves or reduces one or more of the above-mentioned problems, the present disclosure provides an evaluation method for use in an evaluation system, including a subject device under evaluation, a remote controller which operates the subject device, and an evaluation device which controls the remote controller to operate the subject device and automatically evaluates operation of the subject device, the evaluation method including: generating and executing, by an execution unit of the evaluation device, a code for causing the remote controller to operate the subject device; transmitting, by a transmitting unit of the evaluation device, the code to the remote controller; receiving, by a receiving unit of the evaluation device, a log acquired by the subject device as a result of operation of the subject device; analyzing, by an analysis unit of the evaluation device, the log received by the receiving unit; and determining, by a determination unit of the evaluation device, correctness of operation of the subject device based on a result of the analysis by the analysis unit, to cause the subject device to perform a subsequent operation.

Other objects, features and advantages of the present disclosure will be apparent from the following detailed description when read in conjunction with the accompanying drawings.

### BRIEF DESCRIPTION_OF THE DRAWINGS

FIG. 1 is a diagram illustrating the composition of an evaluation system of an embodiment of the present disclosure.
FIG. 2 is a block diagram illustrating the hardware composition of an evaluation device of an embodiment of the present disclosure.
FIG. 3 is a block diagram illustrating the functional composition of a subject device, a remote controller, and the evaluation device in the evaluation system of this embodiment.
FIG. 4 is a diagram for explaining operation of the evaluation system of this embodiment.
FIG. 5 is a flowchart for explaining processing of a script execution unit in the evaluation device of this embodiment.
FIG. 6A, FIG. 6B and FIG. 6C are diagrams illustrating examples of the information stored in a status storing unit in the evaluation device of this embodiment.
FIG. 7 is a diagram illustrating an example of a log in a predetermined format.
FIG. 8 is a diagram illustrating a first example of an association table stored in the status storing unit.
FIG. 9 is a diagram illustrating a second example of the association table stored in the status storing unit.
FIG. 10 is a diagram illustrating a third example of the association table stored in the status storing unit.

### DETAILED DESCRIPTION OF PREFERRED EMBODIMENTS

A description will now be given of embodiments of the present disclosure with reference to the accompanying drawings.

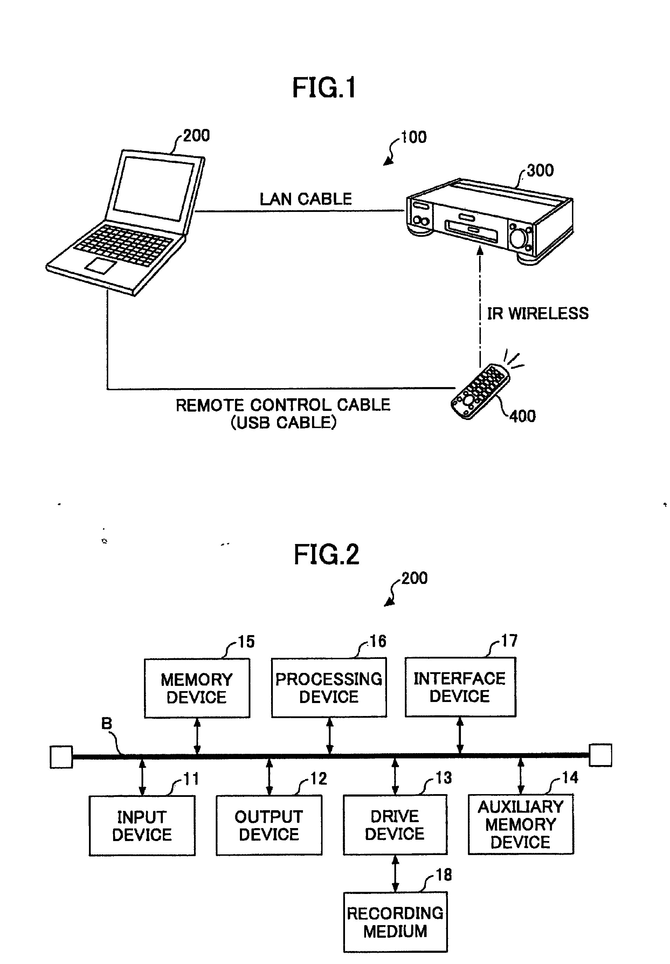

FIG. 1 illustrates the composition of an evaluation system of an embodiment of the present disclosure. In the evaluation system of this embodiment, an evaluation device automatically performs verification of operation of an electronic device under evaluation, acquires a log indicating a result of the verification, and analyzes the acquired log to evaluate the operation of the electronic device.

As illustrated in FIG. 1, the evaluation system 100 of this embodiment includes an evaluation device 200, an electronic device under evaluation (which is called a subject device) 300, and a remote controller 400 that operates the subject device 300.

In this embodiment, the evaluation device 200 and the subject device 300 are connected together by, for example, a LAN (local area network) cable. The remote controller 400 and the evaluation device 200 are connected together by, for example, a remote control cable, such as a USB (universal serial bus) cable. The subject device 300 and the remote controller 400 communicate with each other by infrared radiation (IR) wireless communication.

The subject device 300 of this embodiment is, for example, a STB (set-top box). The STB is a device which receives broadcasting signals, such as, cable television broadcasting, satellite broadcasting and terrestrial TV broadcasting (digital broadcasting, analog broadcasting), and IP (Internet Protocol) broadcasting, and converts the received signal into a signal that allows the viewing and listening of a broadcasting program on a normal TV. The subject device 300 is not limited to the STB in this embodiment. Alternatively, the subject device 300 may be any electronic device, including a game machine, an audio player, etc., operation of which is controlled by the remote controller 400.

In the evaluation system 100 of this embodiment, the evaluation device 200 controls the remote controller 400 to operate the subject device 300. Specifically, a signal for operating the subject device 300 is transmitted from the evaluation device 200 to the remote controller 400. The remote controller 400 receives this signal and transmits a manipulate signal based on the received signal, to the subject device 300 by the TR wireless communication.

The subject device 300 operates based on the manipulate signal from the remote controller 400, and transmits a log indicating records of the operation to the evaluation device 200. The evaluation device 200 analyzes the log received from the subject device 300, and evaluates whether the operation of the subject device 300 is correct. In this embodiment, the evaluation device 200 acquires a log from the subject device 300, for example, via a telnet (telecommunication network) .

FIG. 2 is a block diagram illustrating the hardware composition of the evaluation device of this embodiment.

The evaluation device 200 of this embodiment includes an input device 11, an output device 12, a drive device 13, an auxiliary memory device 14, a memory device 15, a processing unit 16, and an interface device 17 which are connected together via a bus B.

The input device 11 includes a keyboard, a mouse, etc., and this input device is used to input various signals. The output device 12 includes a display unit, etc., and this output device is used to display various screens, data, etc. The drive device 13 drives a program recorded on a recording medium 18. The auxiliary memory device 14 stores the evaluation program according to the present disclosure installed therein, and the necessary files and data, etc.

The memory device 15 reads the evaluation program from the auxiliary memory device 14 at a time of starting of the evaluation device 200 and stores the evaluation program therein. The processing unit 16 controls processing of the entire evaluation device 200. The processing unit 16 performs various processing (which will be described later) according to the evaluation program stored in the memory device 15. The interface device 17 includes a modem, a LAN card, etc., and this interface device is used to connect the evaluation device 200 to the network.

The evaluation program of the present disclosure constitutes at least a part of the various programs which control the evaluation device 200. For example, the evaluation program may be supplied to a user by distributing the recording medium 18 in which the evaluation program is recorded or by downloading the evaluation program to the evaluation device 200 from the network. The recording medium 18 in which the evaluation program is recorded may be any of various types of recording media, such as a CD-ROM (compact disc read-only memory), a flexible disk, a magneto-optical disk, a ROM (read-only memory), a flash memory, etc.

When the recording medium 18 in which the evaluation program is recorded is placed in the drive device 13, the evaluation program from the recording medium 18 is installed in the auxiliary memory device 14 through the drive device 13. The downloaded evaluation program from the network is installed in the auxiliary memory device 14 through the interface device 17.

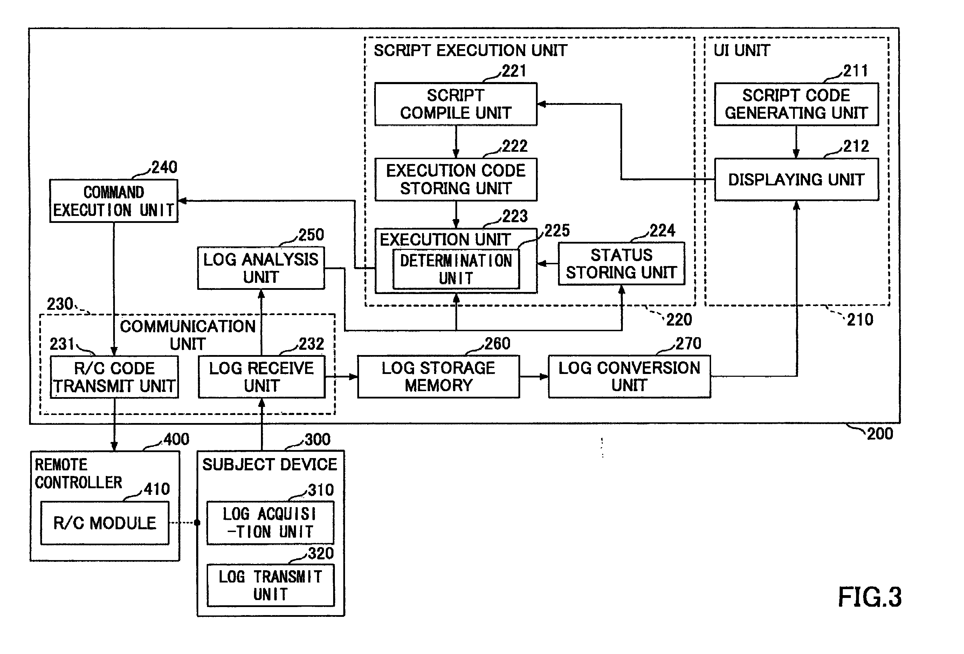

FIG.3 is a block diagram illustrating the functional composition of the subject device, the remote controller,and the evaluation device in the evaluation system of this embodiment.

The evaluation device 200 of this embodiment includes a UI (user interface) unit 210, a script execution unit 220, a communication unit 230, a command execution unit 240, a log analysis unit 250, a log storage memory 260, and a log conversion unit 270.

The evaluation device 200 of this embodiment causes the script execution unit 220 to execute a script generated by the UI unit 210, and causes the command execution unit 240 to transmit a command (remote control code) to the remote controller 400 through the communication unit 230.

The remote controller 400 transmits a manipulate signal to the subject device 300 in response to the remote control code from the evaluation device 200. The subject device 300 operates in response to the manipulate signal from the remote controller 400, converts the result of the operation into a log, and transmits the log to the evaluation device 200.

The evaluation device 200 receives the log through the communication unit 230, causes the log analysis unit 250 to analyze the received log, and sends the analysis result from the log analysis unit 250 to the script execution unit 220. The script execution unit 220 evaluates operation of the subject device 300 based on the analysis result of the log.

The evaluation device 200 receives a log through the communication unit 230, temporarily stores the received log into the log storage memory 260, and converts the received log into a script code through the log conversion unit 270.

The UI unit 210 of this embodiment includes a script code generating unit 211 and a displaying unit 212. The script code generating unit 211 displays, for example, a screen for generating a script code on the displaying unit 212. The displaying unit 212 is, for example, a display device which constitutes a part of the output device 12. The script code generating unit 211 of this embodiment may be constituted by, for example, a script code generation supporting application which enables the user to easily generate a desired script code at a time of generating a script code the screen displayed on the displaying unit 212.

The script execution part 220 of this embodiment includes a script compile unit 221, an execution code storing unit 222, an execution unit 223, and a status storing unit 224.

The script compile unit 221 compiles the script code generated by the UI unit 210, into an execution code. The execution code storing unit 222 stores the execution code from the script compile unit 221. The execution unit 223 reads and performs the execution code stored by the execution code storing unit 222.

The execution unit 223 of this embodiment includes a determination unit 225. The determination unit 225 compares a value of the status obtained from the analysis result of the log analysis unit 250 with a value of the status stored in the status storing unit 224, and determines operation of the subject device 300 based on the result of the comparison. The processing of the determination unit 225 will be described later.

In the status storing unit 224, the information regarding the status of the subject device 300 which is used for the determination of the determination unit 225 is stored. For example, in the status storming unit 224 of this embodiment, a value of the status which indicates the subject device 300 having received a signal from the remote controller 400, a value of the status which indicates the subject device 300 having started channel selection, a value of the status which indicates the subject device 300 having ended channel selection, etc. are stored. The value of the status stored in the status storing unit 224 will be described later.

The values of the status stored in the status storing unit 224 of this embodiment may include a predetermined value which may not be changed, and a value (which may be changed by the UI unit 210. In the status storing unit 224 of this embodiment, information which is associated with the kind of each UI screen displayed in the subject device 300, and information which is associated with the setting values, the coordinate information, etc. of the UI unit are stored.

In this embodiment, the execution code storing unit 222 and the status storing unit 224 may be constituted by, for example, storage regions provided in the auxiliary memory device 14 of the evaluation device 200.

The communication unit 230 includes a remote control code transmit unit 231 and a log receive unit 232. The remote control code transmit unit 231 transmits the remote control code output from the command execution unit 240 to the remote controller 400. The log receive unit 232 receives the log transmitted from the subject device 300.

The command execution unit 240 generates a remote control code to be transmitted to the remote controller 400, from the execution code stored in the execution code storing unit 222. When the remote control code is generated by the command execution unit 240, the remote control code is transmitted to the remote controller 400 by the remote control code transmit unit 231.

The log analysis unit 250 analyzes the log received by the log receive unit 232, and acquires the value of the status of the subject device 300 contained in the log. The value of the status acquired by the log analysis unit 250 is sent to the execution unit 223.

The log which is received by the log receive unit 232 is stored in the log storage memory 260. The log conversion unit 270 converts the log stored in the log storage memory 260 into a script code. The processing of the log conversion unit 270 will be described later.

The subject device 300 of this embodiment includes a log acquisition unit 310 and a log transmit unit 320. The log acquisition unit 310 of this embodiment acquires a log in a predetermined format indicating operation of the subject device 300 which is performed in response to a manipulate signal from the remote controller 400. The log transmit unit 320 transmits the log in the predetermined format acquired by the log acquisition unit 310, to the evaluation device 200.

The remote controller 400 of this embodiment includes a remote control module 410. When the remote control code is received from the evaluation device 200, the remote control module 410 outputs a manipulate signal based on the remote control code to the subject device 300.

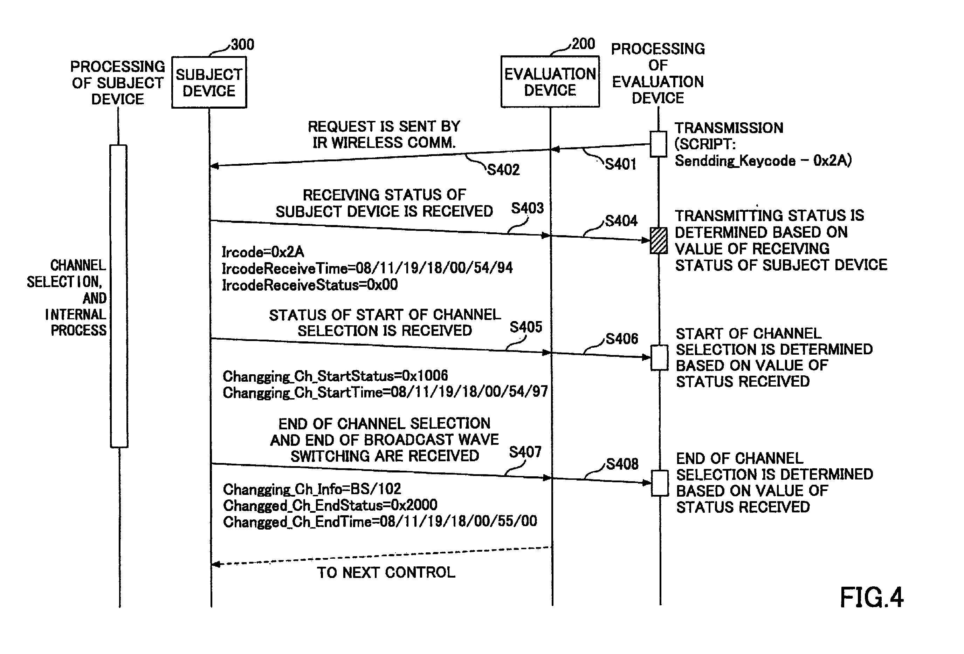

With reference to FIG. 4, operation of the evaluation system 100 of this embodiment will be described. FIG. 4 is a diagram for explaining operation of the evaluation system of this embodiment.

In the example illustrated in FIG. 4, a broadcast airwave switching process (channel selection) is performed in the STB which is the subject device 300, and it is determined whether operation of the subject device 300 is correct.

The evaluation device 200 causes the script execution unit 220 to compile a script code into an execution code, performs the execution code, and causes the command execution unit 240 to generate a remote control code which requests a channel selection (step S401). The evaluation device 200 transmits the remote control code to the remote controller 400.

The remote controller 400 transmits a manipulate signal in response to the remote control code to the subject device 300 by the IR wireless communication (step S402).

When the manipulate signal is received, the subject device 300 acquires a receiving condition (receiving status) as a log by the log acquisition unit 310, and causes the log transmit unit 320 to transmit the log to the evaluation device 200 (step S403).

When the log receive unit 232 receives the log from the subject device 300, the evaluation device 200 causes the log analysis unit 250 to acquire the value of the receiving status from the log, and causes the determination unit 225 to determine operation of the subject device 300 based on the value of the receiving status (step S404).

The subject device 300 starts the channel selection according to the manipulate signal, and acquires a log of the channel selection start condition (channel selection start status) by the log acquisition unit 310. The subject device 300 causes the log transmit unit 320 to transmit the acquired log to the evaluation device 200 (step S405).

The evaluation device 200 causes the log analysis unit 250 to acquire the channel selection start status from the log, and causes the determination unit 225 to determine operation of the subject device 300 based on the value of the channel selection start status (step S406).

Subsequently, after the broadcast airwave switching is completed and the channel selection is completed in the subject device 300, the subject device 300 causes the log acquisition unit 310 to acquire a log of the end of the channel selection (channel selection end status), and causes the log transmit unit 320 to transmit the log to the evaluation device 200 (step S407).

The evaluation device 200 causes the log analysis unit 250 to acquire the value of the channel selection end status from the log, and causes the determination unit 225 to determine operation of the subject device 300 based on the value of the channel selection end status (step S408) .

In the present embodiment, the evaluation device 200 may be arranged such that, when any log is not output from the subject device 300 even after a predetermined time has elapsed, the event is recognized as being a time-out event.

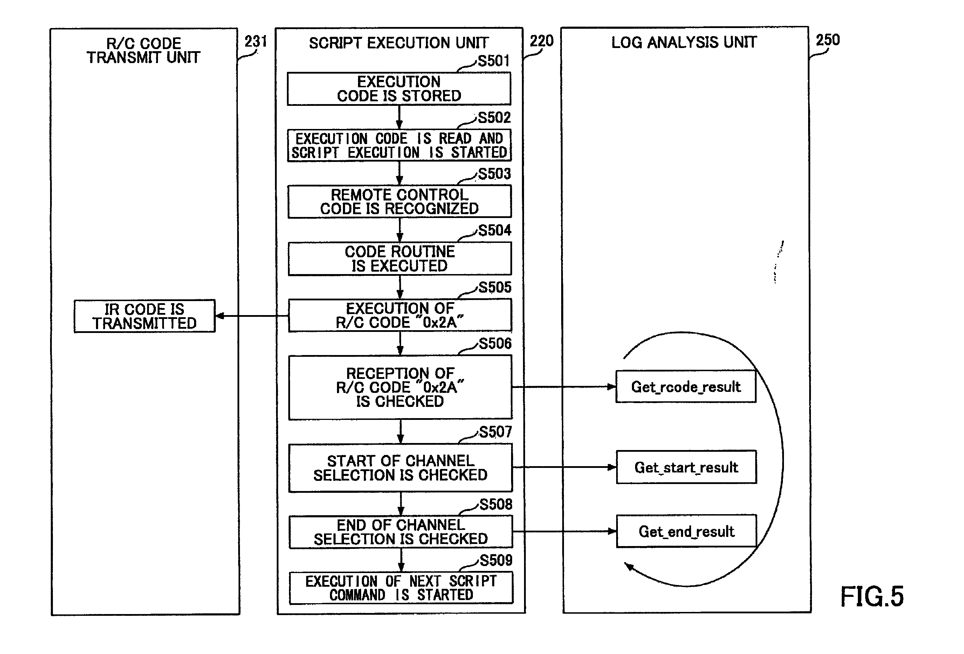

With reference to FIG. 4 and FIG. 5, the processing of the script execution unit 220 of the evaluation device 200 in the above-described processing will be described. FIG. 5 is a flowchart for explaining the processing of the script execution unit.

The evaluation device 200 causes the script compile unit 221 to compile a script code "Sendding_Keycode 0x2A" specified in the UI unit 210, into an execution code, and stores the execution code in the execution code storing unit 222 (step S501). The Keycode 0x2A is, for example, a script code which causes the subject device 300 to select the "BS/102" channel. Subsequently, the execution unit 223 reads the execution code from the execution code storing unit 222 and starts execution of the execution code (step S502).

Subsequently, the execution unit 223 recognizes the remote control code to be transmitted to the remote controller 400 (step S503). Subsequently, the execution unit 223 executes the code routine (step S504).

Subsequently, the execution unit 223 performs the remote control code corresponding to the Keycode 0x2A by using the command execution unit 240 (step S505). Thereby, the remote control code is transmitted to the remote controller 400 from the remote control code transmit unit 231.

Subsequently, the script execution unit 220 of the evaluation device 200 checks that the remote control code has been received by the subject device 300 by using the determination unit 225 (step S506).

As illustrated in FIG. 4, when the Keycode 0x2A is received, the subject device 300 of this embodiment acquires the log as the receiving status. The log acquisition unit 310 of the subject device 300 acquires the log in the predetermined format. The log acquisition unit 310 acquires "Ircode = 0x2A Ircode Receive Time = 08/11/19/18/00/54/94, Ircode Receive Status = 0x00" as this log. The code which is received by the subject device 300, the time the code is received by the subject device 300, and the receiving status which indicates that the code is received are contained in this log. Then, the subject device 300 causes the log transmit unit 320 to transmit this log to the evaluation device 200.

When this log is sent from the log receive unit 232 to the log analysis unit 250, the log analysis unit 250 acquires the value of the receiving status contained in the log, and sends the status value to the determination unit 225. The determination unit 225 compares the value (0x00) of the status of the received log with the corresponding value stored in the status storing unit 224, and determines whether the subject device 300 has received the corresponding remote control code.

The determination unit 225 of this embodiment accesses the content of the status storing unit 224 and determines whether the value of the status of the received log is equal to the value = 0x00 stored in the status storing unit 224 that indicates the completion of reception of the remote control code by the subject device 300.

When the value of the status of the received log is equal to the value = 0x00 stored in the status storing unit 224 that indicates the completion of reception, the determination unit 225 determines that it is the completion of reception of the remote control code by the subject device 300.

When the value of the status of the received log is not equal to the value = 0x00 stored in the status storing unit 224 that indicates the completion of reception, the determination unit 225 determines that it is not the completion of reception of the remote control code by the subject device 300.

Subsequently, as illustrated in FIG. 5, based on the log received from the log receive unit 232 at the log analysis unit 250, the script execution unit 220 of the evaluation device 200 checks that the channel selection in the normal viewing/listening state of the subject device 300 has been started, by using the determination unit 225 (step S507).

As illustrated in FIG. 4, the subject device 300 of this embodiment acquires the log in the predetermined format as the channel selection start status. The log acquisition unit 310 acquires "Changging_Ch_Start Status = 0x1006,

Changging_Ch_Start Time = 08/11/19/18/00/54/97" as this log. The channel selection start status which indicates the channel selection start in the subject device 300, and the time the channel selection is started are contained in this log. Then, the subject device 300 causes the log transmit unit 320 to transmit this log to the evaluation device 200.

The log analysis unit 250 acquires the value of the channel selection start status from this log. The determination unit 225 of this embodiment determines whether the value of the status of the received log is equal to the value = 0x1006 stored in the status storing unit 224 that indicates the channel selection is started in the subject device 300.

Because the association table 90 (which will be described later) which is stored in the status storing unit 224 is defined to include the value of the channel selection start status = 0x1006, the determination unit 225 determines that the channel selection is started in the subject device 300.

When the value of the channel selection start status of the received log is not equal to the value = 0x1006 defined in the status storing unit 224, the determination unit 225 determines that the channel selection is not started in the subject device 300.

Subsequently, the script execution unit 220 of the evaluation device 200 checks that the channel selection has been completed in the subject device 300 by using the determination unit 225, based on the log received from the log receive unit 232 at the log analysis unit 250 (step S508).

As illustrated in FIG. 4, the subject device 300 of this embodiment acquires the log in the predetermined format as the channel selection end status. The log acquisition unit 310 acquires "Changging_Ch_Info = BS/102, Changged_Ch_End Status = 0x2000, Changged_Ch_End Time = 08/11/19/18/00/55/00" as this log. The information which indicates the channel after the channel selection is completed, the channel selection end status which indicates the end of the channel selection in the subject device 300, and the time the channel selection is ended are contained in this log. Then, the subject device 300 causes the log transmit unit 320 to transmit this log to the evaluation device 200.

The log analysis unit 250 acquires the value of the channel selection end status from this log. In this embodiment, the value of the channel selection end status in the log is equal to 0x2000. The determination unit 225 of this embodiment determines whether the value of the status of the received log is equal to the value = 0x2000 stored in the status storing unit 224 that indicates the end of the channel selection in the subject device 300. Because the association table 10 (which will be described later) which is stored in the status storing unit 224 is defined to include the value of the status = 0x2000 when the processing is normally completed, the determination unit 225 determines that the channel selection is ended in the subject device 300.

When the value of the channel selection end status in the received log is not equal to the value = 0x2000 defined in the status storing unit 224, the determination unit 225 determines that the channel selection is not ended in subject device 300.

After the channel selection is completed in the subject device 300, the evaluation device 200 starts execution of the next script command (step S509).

In the present embodiment, the status storing unit 224 is configured to store the value of the status acquired by the log analysis unit 250. In the present embodiment, operation of the subject device 300 may be determined by using the value of the status stored in the status storing unit 224 by the log analysis unit 250.

By this composition in this embodiment, verification and evaluation of operation of the subject device 300 can be performed using the value of the status newly acquired during execution of the script code, and the flexibility of the verification and evaluation of operation of the subject device 300 can be increased.

In the present embodiment, time information is included in a log. Hence, a period from the time the subject device 300 receives the Keycode to the time a channel selection is completed can be determined based on the content of the received log. Therefore, it is possible for the present embodiment to automatically determine the time related to the state transition in the subject device 300.

The determination as to correctness of operation of the subject device 300 by the evaluation device 200 of this embodiment will be described.

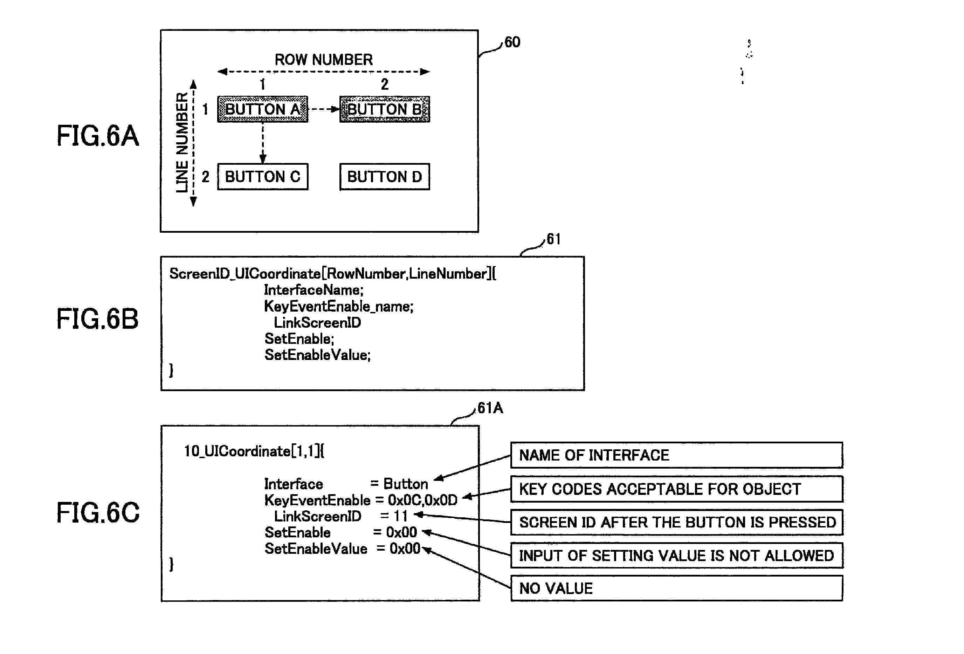

Each object (a button, an input frame, etc.) which constitutes each UI screen is stored in the status storing unit 224 of this embodiment. FIGs. 6A-6C are diagrams illustrating examples of the information stored in the status storing unit. FIG. 6A is a diagram illustrating an example of a UI screen, FIG. 6B is a diagram illustrating an example of a database format structure which defines each button of a UI screen, and FIG. 6C is a diagram illustrating an example of the structure when a button A is defined.

It is assumed that a button A displayed on a UI screen 60 illustrated in FIG. 6A is defined using a database format structure 61 illustrated in FIG. 6B, and an example 61A of the structure of the button A is as illustrated in FIG. 6C.

In the status storing unit 224 of this embodiment, the association table in which the operation pattern in each UI screen and the value of the status associated with the operation pattern are defined is stored. The operation pattern may include, for example, an operation to move the focus object from the button A to the button B, an operation to move the focus object from the button A to the button C, an operation to display another UI screen, etc.

In the evaluation device 200 of this embodiment, a log of the subject device 300 is compared with the content of the association table stored in the status storing unit 224, and correctness of operation of the subject device 300 is determined based on the log.

For example, the determination of correctness of operation of the subject device 300 in this embodiment in a case in which operation of the subject device 300 to change the focus object in the screen 60 from the button A to the button B is performed will be described.

In this case, the evaluation device 200 automatically evaluates operation of the subject device 300 based on a log which indicates whether the remote control code is transmitted, a log which indicates a start of the movement of the focus object, and a log which indicates the end of the movement of the focus object.

The evaluation device 200 of this embodiment transmits a remote control code which causes the operation "->" (to move the focus object in the screen 60 from the left-hand side to the right-hand side) to the remote controller 400. This remote control code is sent to the subject device 300 via the remote controller 400.

The subject device 300 performs processing in response to the remote control code and acquires a log of the processing result in the predetermined format by using the log acquisition unit 310.

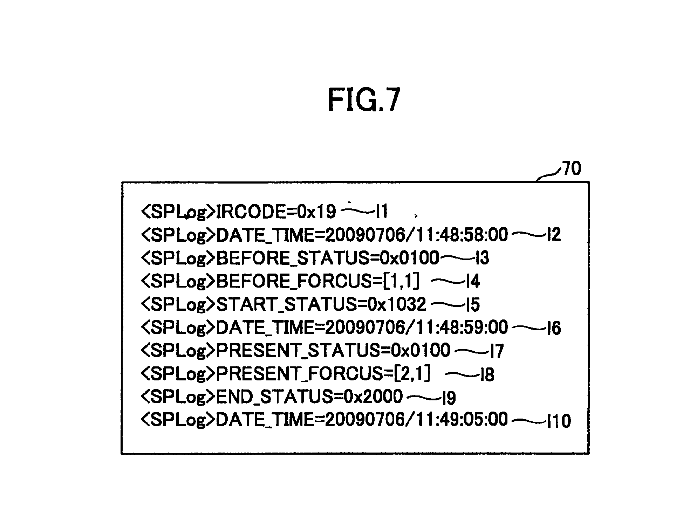

FIG. 7 is a diagram illustrating an example of the log acquired in the predetermined format. The log 70 illustrated in FIG. 7 is an example of the log transmitted from the subject device 300 to the evaluation device 200, when the operation of moving the focus object in the screen 60 displayed on the subject device 300 from the left-hand side to the right-hand side is performed.

Line 11 of the log 70 illustrated in FIG. 7 indicates the remote control code received by the subject device 300. The code of line 11 is a remote control code which indicate that a right-hand button of a cross key of the remote controller 400 has been pushed.

Line 12 of the log 70 indicates the time the remote control code at line 11 is received, and line 13 of the log 70 indicates the screen 60 which is currently displayed. Line 14 of the log 70 indicates the coordinates of the button which is currently the focus object. It can be understood from line 14 that the coordinates of the button which is currently the focus object correspond to the coordinates of the button A stored in the status storing unit 224 of the evaluation device 200.

Line 15 of the log 70 indicates that the focus object is moved from the left-hand side to the right-hand side (state transition). In this embodiment, the value of the status which indicates each state transition is stored in the status storing unit 224 of the evaluation device 200 as the association table.

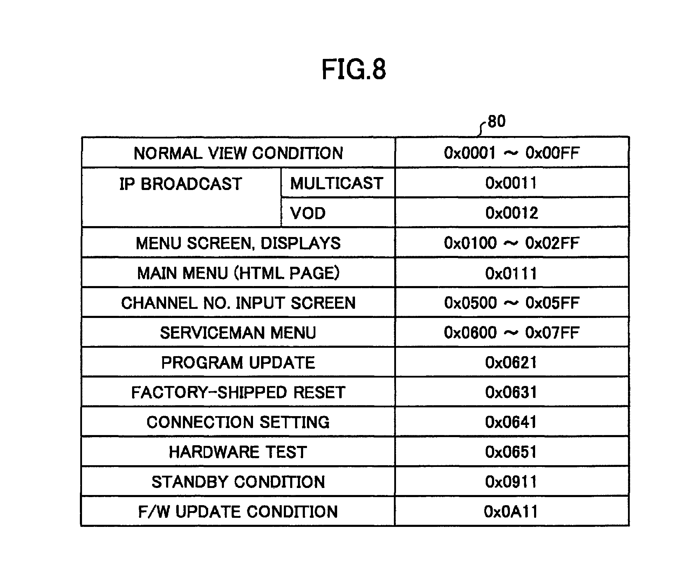

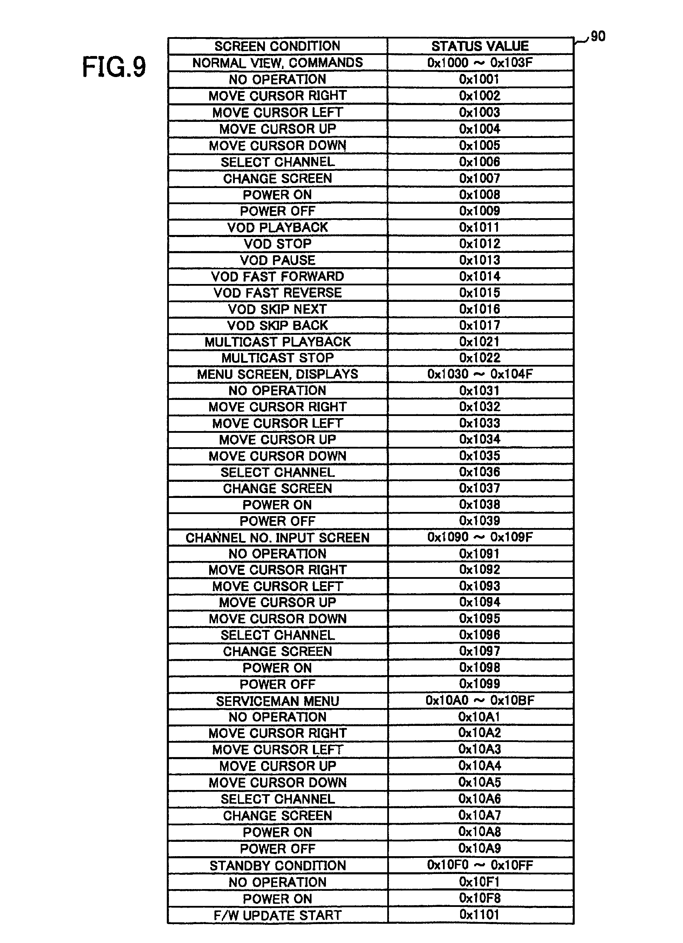

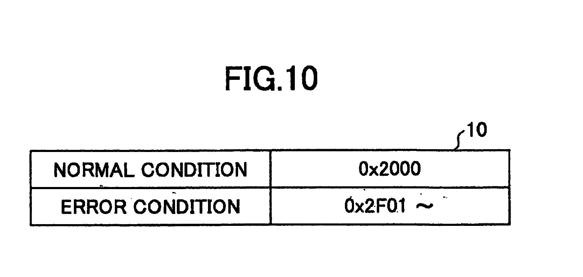

Next, the association table stored in the status storing unit 224 will be described. FIG. 8 is a diagram illustrating a first example of the association table, FIG. 9 is a diagram illustrating a second example of the association table, and FIG. 10 is a diagram illustrating a third example of the association table.

The association table 80 of FIG. 8 defines the values of the status indicate a screen condition or other conditions. The association table 80 includes the values of the status for the command BEFORE_STATUS and the command PRESENT_STATUS. The association table 90 of FIG. 9 defines the values of the status of changes of operation. The association table 90 includes the values of the status for the command START_STATUS. The association table 10 of FIG. 10 defines the values of the status at the time of the end of changes of operation. The association table 10 includes the values of the status for the command END_STATUS.

The value of the status of the command BEFORE_STATUS at line 13 of the log 70 is equal to 0x0100. Because the value of the status of the command BEFORE_STATUS of the log 70 is equal to the value associated with the screen 60 which is one of the menu screens in the association table 80, the determination unit 225 of the evaluation device 200 determines that the screen currently displayed in the subject device 300 is the screen 60.

The value of the status of the command START_STATUS at line 15 of the log 70 is equal to 0x1032. Because the value of the status of the command START_STATUS of the log 70 is equal to the value associated with the operation of the cursor movement "->" in the menu screen in the association table 90, the determination unit 225 of the evaluation device 200 determines that the operation of the subject device 300 is correct.

Line 16 of the log 70 indicates the time the movement of the focus object is started. Line 17 of the log 70 indicates the screen which is displayed after the movement of the focus object is performed. The determination unit 225 determines that the screen currently displayed is the screen 60, from the content of line 17, similar to the content of line 13.

Line 18 of the log 70 indicates the coordinates of the destination button after the cursor movement is performed. It can be understood from line 18 of the log 70 that the coordinates of the destination button at the end of the cursor movement correspond to the coordinates of the button B stored in the status storing unit 224.

Line 19 of the log 70 indicates that the movement of the focus object is ended. The value of the status of the command END_STATUS at line 19 is equal to 0x2000. Because the value of the status of the END_STATUS of the log 70 is equal to the value associated with the normal end in the association table 10, the determination unit 225 of the evaluation device 200 determines that the operation is ended in the subject device 300 correctly. Line 110 of the log 70 indicates the time the movement of the focus object is ended.

In the evaluation device 200 of this embodiment, correctness of operation of the subject device 300 can be determined based on the content of the log 70 and the operation pattern stored in the status storing unit 224.

In the evaluation device 200 of this embodiment, a script code can be generated based on the log acquired from the subject device 300. The evaluation device 200 of this embodiment stores the log received by the log receive unit 232 in the log storage memory 260. The stored log is converted into a script code by the log conversion unit 270.

For example, if an error with poor reappearance arises, the operation which causes the error to arise can be correctly reproduced based on the stored log by using the above-described function of the evaluation device 200 of this embodiment.

As described above, the evaluation device 200 of this embodiment is arranged so that the value of the status contained in the log output from the subject device 300 is compared with the value of the status which indicates the condition of operation of the subject device 300 stored in the status storing unit 224, and correctness of the operation of the subject device 300 by the remote control can be determined automatically. Therefore, it is possible for the evaluation device 200 of this embodiment to perform evaluation of operation of the subject device 300 with good accuracy and reduce the expenses in time and effort for verification and evaluation of operation of the subject device 300.

In this embodiment, it is possible to generate the script code which causes the operation which outputs the log to be reproduced, based on the log acquired from the subject device 300. Therefore, even if an error with poor repeatability arises, the error can be reproduced correctly according to this embodiment, the expenses in time and effort for verification and evaluation of operation of the subject device 300 can be reduced.

In this embodiment, the script code for evaluation of operation of the subject device 300 can be stored, and execution of the stored script code will make it possible to easily evaluate operation of the subject device 300.

In this embodiment, the subject device 300 has been described as being the STB. However, the present disclosure is applicable to any electronic device that operates in accordance with the program installed therein.

As described in the foregoing, according to the present disclosure, it is possible to automatically perform evaluation of operation of a subject device with good accuracy and reduce the expenses in time and effort for verification and evaluation of operation of the subject device.

## Claims

1. An evaluation system (100), comprising:
a subject device (300) under evaluation;
a remote controller (400) which operates the subject device; and
an evaluation device (200) which controls the remote controller to operate the subject device and automatically evaluates operation of the subject device,
the evaluation device comprising:
an execution unit (240) configured to generate and execute a code for causing the remote controller (400) to operate the subject device (300);
a transmitting unit (231) configured to transmit the code to the remote controller (400);
a receiving unit (232) configured to receive a log acquired by the subject device as a result of operation of the subject device;
an analysis unit (250) configured to analyze the log received by the receiving unit; and
a determination unit (225) configured to determine correctness of operation of the subject device (300) based on a result of the analysis by the analysis unit (250), and to cause the subject device (300) to perform a subsequent operation.

2. The evaluation system according to claim 1, wherein the evaluation device (200) comprises a status storing unit (224) configured to store a value indicating a status of the subject device (300), and
wherein the analysis unit (250) is arranged to acquire a value indicating a status of the subject device from the log, and the determination unit (225) is arranged to compare the value of the state of the subject device contained in the log acquired by the analysis unit, with the value of the status of the subject device stored in the status storing unit, and to determine correctness of the operation of the subject device based on a result of the comparison.

3. The evaluation system according to claim 1, wherein the log contains time information which indicates a start time a change of the status of the subject device (300) is started, and indicates an end time the change of the status of the subject device (300) is ended, and
wherein the analysis unit (250) is arranged to acquire the time information from the log, and the determination unit (225) is arranged to measure a period between the start time and the end time of the change of the status of the subject device based on the time information acquired by the analysis unit.

4. The evaluation system according to claim 1, wherein the evaluation device (200) comprises a script compile unit (221) configured to compile a script code into an execution code and to send the execution code to the execution unit as the code for causing the remote controller to operate the subject device.

5. The evaluation system according to claim 4, wherein the evaluation device (200) comprises a script code generating unit (210) configured to generate a script code and to send the script code to the script compile unit.

6. The evaluation system according to claim 4, wherein the evaluation device (200) comprises:
a log storing unit (260) configured to store a log acquired from the subject device; and
a conversion unit (270) configured to convert the log stored in the log storing unit into a script code.

7. The evaluation system according to claim 1, wherein the evaluation device (200) comprises a database in which information regarding an operation pattern of the subject device (300) is stored, and the subject device (300) is arranged to acquire a log in a predetermined format corresponding to the operation pattern.

8. An evaluation device (200) provided in the evaluation system according to claim 1, wherein the evaluation device (200) comprises a status storing unit (224) configured to store a value indicating a status of the subject device (300), and
wherein the analysis unit (250) is arranged to acquire a value indicating a status of the subject device (300) from the log, and the determination unit (250) is arranged to compare the value of the state of the subject device contained in the log acquired by the analysis unit, with the value of the status of the subject device stored in the status storing unit, and to determine correctness of the operation of the subject device based on a result of the comparison.

9. An evaluation method for use in an evaluation system (100), including a subject device (300) under evaluation, a remote controller (400) which operates the subject device, and an evaluation device (200) which controls the remote controller to operate the subject device and automatically evaluates operation of the subject device, the evaluation method comprising:
generating and executing, by an execution unit (240) of the evaluation device, a code for causing the remote controller to operate the subject device;
transmitting, by a transmitting unit (231) of the evaluation device, the code to the remote controller;
receiving, by a receiving unit (232) of the evaluation device, a log acquired by the subject device as a result of operation of the subject device;
analyzing, by an analysis unit (250) of the evaluation device, the log received by the receiving unit; and
determining, by a determination unit (225) of the evaluation device, correctness of operation of the subject device based on a result of the analysis by the analysis unit, to cause the subject device to perform a subsequent operation.

10. A non-transitory computer-readable recording medium storing a program which, when executed by a computer, causes the computer to perform an evaluation method for use in an evaluation system (100), including a subject device (300) under evaluation, a remote controller (400) which operates the subject device, and an evaluation device (200) which controls the remote controller to operate the subject device and automatically evaluates operation of the subject device, the evaluation method comprising:
generating and executing, by an execution unit (240) of the evaluation device, a code for causing the remote controller to operate the subject device;
transmitting, by a transmitting unit (231) of the evaluation device, the code to the remote controller;
receiving, by a receiving unit (232) of the evaluation device, a log acquired by the subject device as a result of operation of the subject device;
analyzing, by an analysis unit (250) of the evaluation device, the log received by the receiving unit: and
determining, by a determination unit (225) of the evaluation device, correctness of operation of the subject device based on a result of the analysis by the analysis, unit, to cause the subject device to perform a subsequent operation.
